# EUROPEAN PATENT SPECIFICATION

(11) **EP 4 272 878 B1**
(45) Date of publication and mention of the grant of the patent: **15.10.2025**
(21) Application number: 22904628.9
(22) Date of filing: 06.12.2022
(51) Int. Cl.: B05C 5/02, B05C 11/10, H01M 4/04

(54) **SLOT DIE SHIM AND SLOT DIE INCLUDING SAME**
SCHLITZDÜSENABSTANDSSTÜCK UND SCHLITZDÜSE DAMIT
CALE DE FILIÈRE À FENTE ET FILIÈRE À FENTE LA COMPRENANT

(30) Priority: 08.12.2021 KR 20210174948
(43) Date of publication of application: 08.11.2023
(73) Proprietor: LG Energy Solution, Ltd., Seoul 07335 (KR)
(72) Inventor: MOON, Younggyu, Daejeon 34122 (KR); PARK, Joon Sun, Daejeon 34122 (KR); KIM, Manhyeong, Daejeon 34122 (KR); KIM, Eudeum, Daejeon 34122 (KR); LEE, Byeongwon, Daejeon 34122 (KR)
(74) Representative: Plasseraud IP
(86) International application number: PCT/KR2022/019718
(87) International publication number: WO 2023/106798

(56) References cited:
- CN-U- 207 667 933
- KR-A- 20150 031 036
- KR-A- 20170 136 311
- KR-A- 20170 136 311
- KR-A- 20190 096 114
- KR-A- 20190 096 114
- KR-A- 20210 083 512
- KR-A- 20210 083 512

## Description

### [Technical Field]

This application claims priority to and the benefit of Korean Patent Application No. 10-2021-0174948 filed with the Korean Intellectual Property Office on December 8, 2021.

The present invention relates to a slot die shim and a slot die including the same. Specifically, the present invention relates to a slot die shim and a slot die including the same, which reduce a slurry supply flow rate at an end of an electrode slurry coated portion.

### [Background Art]

Recently, prices of energy sources have increased because of the depletion of fossil fuels, and the interest in environmental pollution is increasing. Therefore, there is an increasing demand for environmental-friendly alternative energy sources. Therefore, research on various power production technologies such as nuclear power, solar power, wind power, and tidal power is being continuously conducted. In addition, interest in power storage devices for more efficiently using the produced energy is high.

In particular, as the development of technologies and demands for mobile devices are increased, there is a rapidly increasing demand for batteries as energy sources. Many studies are being conducted on the batteries in order to meet these needs.

Representatively, regarding a shape of the battery, there is a high demand for an angular or pouch-type secondary battery that may have a small thickness and be applied to products such as mobile phones. Regarding a material, there is a high demand for lithium secondary batteries such as lithium-ion batteries or lithium-ion polymer batteries that have advantages such as a high energy density, a discharge voltage, and output stability.

In general, the secondary battery is structured to include an electrode assembly made by stacking a positive electrode, a negative electrode, and a separator positioned between the positive electrode and the negative electrode. The positive and negative electrodes are each manufactured by applying electrode slurry containing an active material onto a current collector.

A die coater may be used to apply the electrode slurry containing the active material onto the current collector. The die coater refers to a device that supplies a fluid, e.g., electrode slurry, an adhesive agent, a hard coating agent, ceramics, or the like to a portion between machined upper and lower dies by using a pulseless pump or a piston pump and coats a coating target, such as a raw material, a film, a glass panel, or a sheet, with the fluid with a predetermined thickness. Relevant prior art can be found in documents KR20190096114A, KR20210083512A or KR20170136311A.

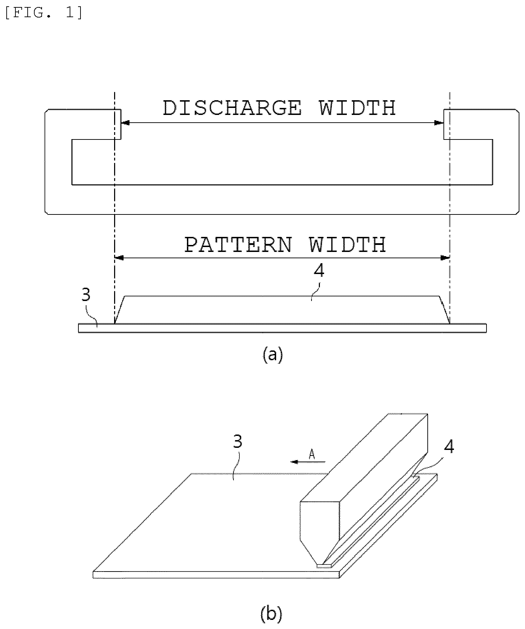

FIG. 1A is a front view of a slot die shim in the related art and a side view of a substrate 3 coated with electrode slurry 4 by using the slot die shim. FIG. 1B is a view illustrating a state in which a slot die in the related art is used to apply the electrode slurry 4 onto the substrate 3.

The slot die, which is used to manufacture an electrode, continuously applies the electrode slurry 4 onto the substrate so that the electrode slurry 4 is long in a predetermined direction. Further, to form a discharge port through which the electrode slurry 4 is discharged, a slot die shim is generally interposed between two dies of the slot die. The slot die may include two or more dies, the slot die shims may be provided between the two or more dies, and the slot die shims may have different shapes.

As the shapes of the electrodes are diversified, studies need to be conducted on the shims for a die coater that are suitable for the shapes of the electrodes.

### [Detailed Description of the Invention]

### [Technical Problem]

The present invention has been made in an effort to solve the above-mentioned problem in the related art, and an object of the present invention is to provide a slot die shim and a slot die including the same, which uniformly adjust the amount of electrode slurry on a coated portion onto which the electrode slurry is applied.

### [Technical Solution]

The invention is as set out in the appended claims. An embodiment of the present invention provides a slot die shim, which is interposed between a first die and a second die and has a plurality of flow paths separated by a plurality of protruding portions so that electrode slurry flows through the plurality of flow paths, the slot die shim including: a coupling portion coupled to the first and second dies; a plurality of first protruding portions protruding from one side of the coupling portion and spaced apart from one another; and one or more second protruding portions positioned between the first protruding portions, in which the second protruding portion includes a groove through which the electrode slurry flows.

Another embodiment of the present invention provides a slot die including a first slot die, a second slot die, and the slot die shim, and any one of the first and second slot dies includes a supply part configured to supply slurry, and a storage part configured to store the slurry.

### [Advantageous Effects]

The slot die shim and the slot die including the same according to the embodiment of the present invention may uniformly adjust the amount of electrode slurry in the coated portion onto which the electrode slurry is applied, and prevent the sliding section from being formed at the end of the coated portion, which makes it possible to reduce a change in discharge capacity ratio of the secondary battery.

### [Brief Description of Drawings]

FIG. 1A is a front view of a slot die shim in the related art and a side view of a substrate coated with electrode slurry by using the slot die shim. FIG. 1B is a view illustrating a state in which a slot die in the related art is used to apply the electrode slurry onto the substrate.
FIG. 2 is a front view of a slot die shim according to an embodiment of the present specification and a side view of a substrate coated with electrode slurry by using the slot die shim.
FIG. 3 is a perspective view of a slot die shim according to another embodiment of the present invention.
FIG. 4 is a perspective view illustrating a slot die shim according to still another embodiment of the present invention.
FIGS. 5A, 5B, and 5C are an assembled view of a slot die according to the embodiment of the present specification and cross-sectional views taken along line C-C', and FIGS. 5A, 5B, and 5C illustrate changes in cross-sections in the cross-sectional views taken along line C-C' depending on a length of a guide of the shim for a die coater.
FIG. 6 is a perspective view illustrating a slot die including a slot die shim according to another embodiment of the present invention.
FIG. 7 is a perspective view and a partially enlarged view illustrating a slot die including a slot die shim according to still another embodiment of the present specification.
FIG. 8 is a graph showing a measured level difference of electrode slurry applied by the slot die according to the embodiment of the present specification and a view illustrating a shape of a depressed portion and corresponding to a cross-sectional view of a second protruding portion.
FIG. 9 is an exploded view of an electrode assembly manufactured by using the slot die according to the embodiment of the present invention.

### [Explanation of Reference Numerals and Symbols]

100: Slot die
10: Slot die shim
11: Coupling portion
12: First protruding portion
12a: First guide
12a-1: Extension portion
12a-2: Bent portion
12b: Second guide
12c: Stepped portion
13: Second protruding portion
13a: Groove
14: Flow path
20: First die
21: First lip
30: Second die
31: Second lip
1: Supply hole
2: Internal space
3: Substrate
4: Electrode slurry

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various embodiments, and specific embodiments will be described in detail in the detailed description. However, the description of the embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, the drawings are intended to illustratively describe the present invention, and the scope of the present invention is not limited by the drawings.

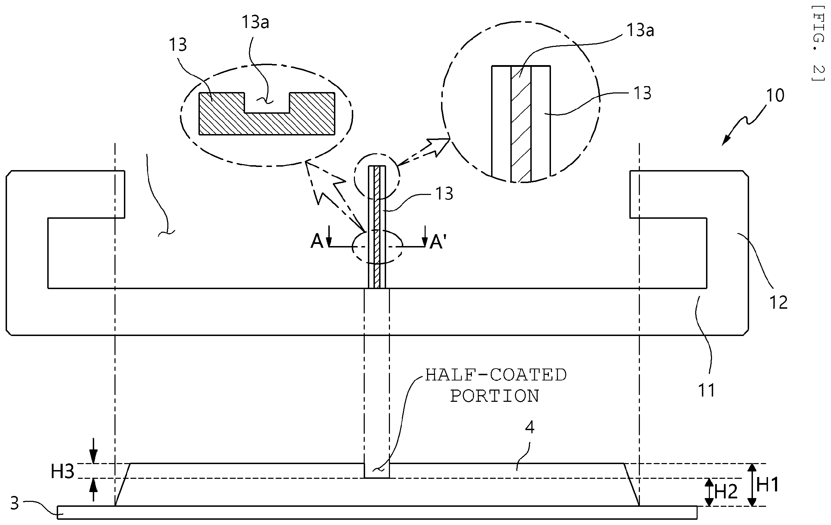

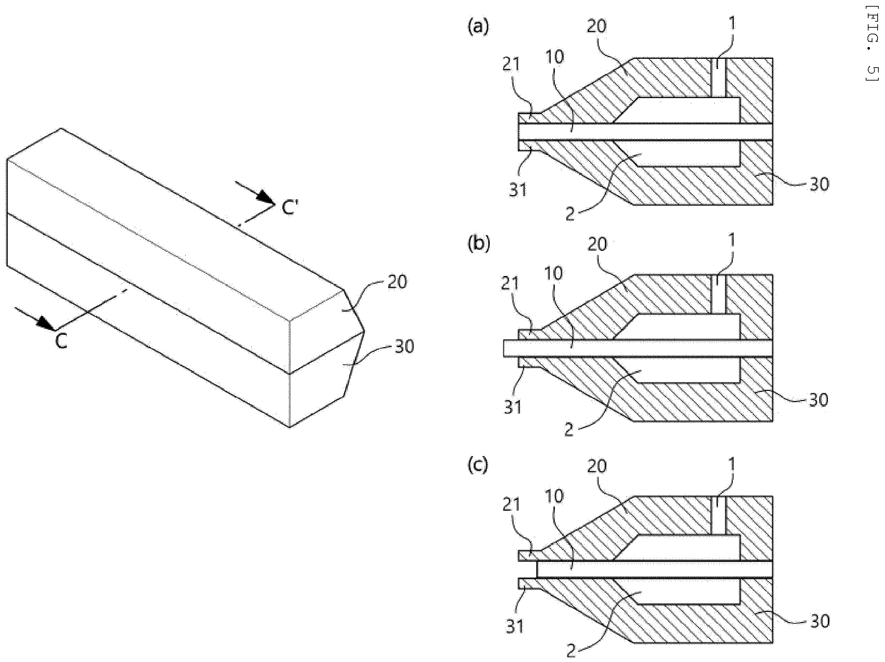

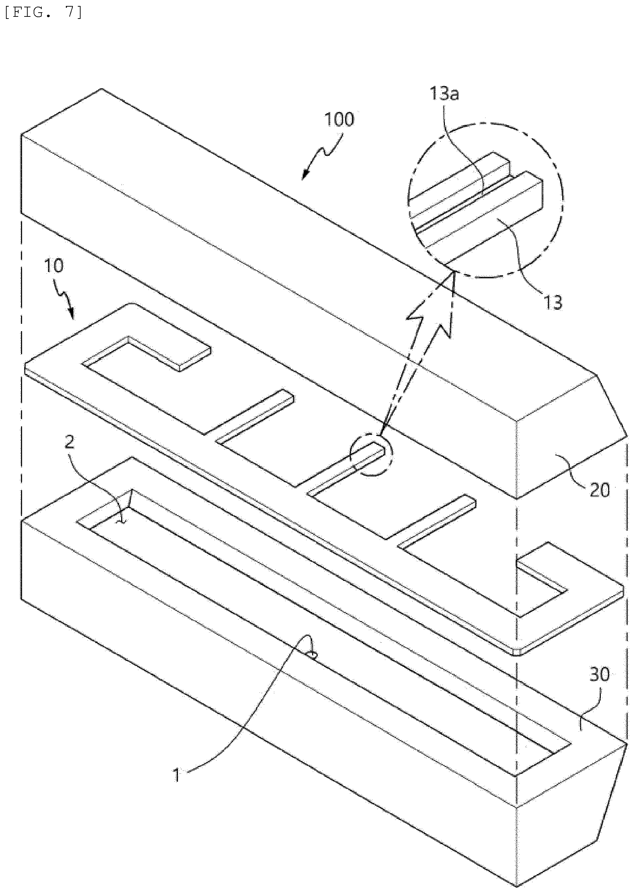

FIG. 2 is a front view of a slot die shim 10 according to an embodiment of the present specification and a side view of a substrate 3 coated with electrode slurry 4 by using the slot die shim. FIGS. 5A, 5B, and 5C are an assembled view of a slot die 100 according to the embodiment of the present specification and cross-sectional views taken along line C-C', and FIGS. 5A, 5B, and 5C illustrate changes in cross-sections in the cross-sectional views taken along line C-C' depending on a length of a guide of the shim for a die coater. Further, FIG. 7 is a perspective view and a partially enlarged view illustrating the slot die 100 including the slot die shim 10 according to the embodiment of the present specification.

The slot die 100 may serve to apply the electrode slurry 4 onto one surface of the substrate and include the slot die shim 10, a first die 20, and a second die 30. The slot die shim 10 may be positioned between the first and second dies 20 and 30 of the slot die 100. Further, the slot die shim 10 may have a plate-shaped structure.

In this case, the substrate is not particularly limited as long as the substrate may be coated with electrode slurry. The substrate may be an electrode current collector, and specifically metal foil. Alternatively, the substrate may be foil made of copper, aluminum, PET, or a combination thereof.

The electrode slurry may be manufactured by receiving and mixing an electrode active material, a conductive material, a binder, and a solvent. The electrode active material may include any one of a positive electrode active material and a negative electrode active material, and particularly include the positive electrode active material. The positive electrode active material may include lithium ions.

The conductive material may increase conductivity of the electrode active material, and the solvent may adjust a viscosity of the electrode slurry.

The binder may physically stabilize an electrode. During the post-process, the binder may increase a bonding force of the electrode active material and the conductive material to a sheet (current collector), e.g., an aluminum or copper sheet coated with the electrode slurry.

Various electrode active materials, various conductive materials, various binders, and various solvents, which may be used in the technical field, may be used as the electrode active material, the conductive material, the binder, and the solvent. The electrode active material, the conductive material, the binder, and the solvent are not particularly limited in terms of types thereof.

The slot die shim 10 may include a coupling portion 11, first protruding portions 12, and a second protruding portion 13. A plurality of flow paths 14 of the slot die shim 10, through which the electrode slurry 4 flows, may be separated by the first and second protruding portions 12 and 13.

The coupling portion 11 may couple the first and second dies 20 and 30 and the slot die shim 10. Therefore, the coupling portion 11 may include a plurality of fastening grooves (not illustrated). The fastening grooves may be formed through the coupling portion 11 in a thickness direction y of the coupling portion 11 and fastened and fixed to fastening grooves provided in the first and second dies 20 and 30 by bolting or the like. Further, the fastening grooves may be arranged in a width direction x of the coupling portion 11.

The plurality of first protruding portions 12 may protrude from one side of the coupling portion 11 and be positioned to be spaced apart from one another. The first protruding portion 12 may extend from one side of the coupling portion 11 in a flow direction of the electrode slurry.

The slot die shim 10 according to the present invention may have the flow paths 14 through which the electrode slurry 4 is supplied, and the flow paths 14 may be defined by the first protruding portions 12. That is, the slot die shim 10 may allow the electrode slurry 4 to be supplied to spaces between the plurality of the first protruding portions 12, so that the electrode slurry 4 may be applied onto one surface of the substrate. The electrode slurry 4 may not be applied to a region in which the first protruding portion 12 is positioned.

That is, the flow path 14 defined by the first protruding portion 12 may have a structure opened in a direction parallel to planes on which the coupling portion 11 and the first and second dies 20 and 30 are in contact with one another. In other words, the flow path 14 may have a structure opened only in the flow direction of the electrode slurry 4, i.e., a structure having three sides closed by the coupling portion 11 and the second protruding portion 12.

The slot die 100 according to the present invention may form a coated portion (not illustrated) on which the electrode slurry 4 is applied onto one surface of the substrate 3; and a non-coated portion (not illustrated) on which the electrode slurry 4 is not applied because of the first protruding portion 12. The non-coated portion may correspond to a region of the slot die shim 10 having the first protruding portion 12.

The second protruding portion 13 may be provided as one or more protruding portions 13 positioned between the plurality of the first protruding portions 12. In the present specification, the term "one or more components" may include one component or include the plurality of components, i.e., two or more components.

Referring to FIG. 2, the slot die shim 10 according to the embodiment of the present invention may include one second protruding portion 13. Therefore, the electrode formed by the slot die 100 according to the embodiment may have one half-coated portion.

Further, when the slot die shim 10 includes two second protruding portions 13, the electrode manufactured by the slot die 100 having the slot die shim 10 including the two protruding portions 13 may have two half-coated portions.

Referring to FIG. 7, the slot die 100 including the slot die shim 10 including three second protruding portions 13 may be used to manufacture an electrode having three half-coated portions.

In case that a set of protrusions is provided on the slot die shim 10, the second protruding portion 13 may be positioned between a pair of first guides 12a. Further, in case that two or more sets of protrusions are provided on the slot die shim 10, the plurality of second protruding portions 13 may be provided between a first guide 12a and a second guide 12b.

FIG. 7 is an enlarged view of the second protruding portion 13, i.e., an enlarged view of a part of the second protruding portion 13 in a direction from the second die 30 to the first die 20. Referring to FIG. 7, the second protruding portion 13 may include a groove 13a through which the electrode slurry flows. The groove 13a may be included in the second protruding portion 13 and opened at one side thereof. The opening of the groove 13a may be provided in a direction in which the second die 13 including a supply hole 1 is positioned.

According to the invention, the groove 13a is opened partially on a plane on which the second protruding portion 13 is in contact with the first or second die 20 or 30 having the supply hole 1. That is, the groove 13a has a structure having three sides closed by an inner wall of the second protruding portion 13, except for a side in a direction in which the electrode slurry is supplied and flows. Further, the groove 13a may be opened in a longitudinal direction z of the second protruding portion 13.

Therefore, the second protruding portion 13 according to the invention is used to coat one surface of the substrate with the electrode slurry smaller in amount than the electrode slurry of a coated portion applied through the flow path 14, such that the half-coated portion (not illustrated) may be formed.

Referring to FIG. 5A, the other end of the second protruding portion 13 may be positioned on the same line as ends of lips 21 and 31 of the first and second dies 20 and 30.

Referring to FIG. 5B, the other end of the second protruding portion 13 may be positioned outside the slot die 100 and provided outward of the ends of the lips 21 and 31 of the first and second dies 20 and 30. In this case, the slot die shim 10 may protrude to the outside. In this case, the other end of the second protruding portion 13 may protrude by more than 0 mm and 0.3 mm or less from the end of the lip. The other end of the protruding second protruding portion 13 protrudes to the extent that the other end of the protruding second protruding portion 13 does not come into contact with the substrate that is a coating target. Specifically, a difference between the other end of the second protruding portion 13 and the ends of the lips 21 and 31 is smaller than a distance between the substrate and the ends of the lips 21 and 31.

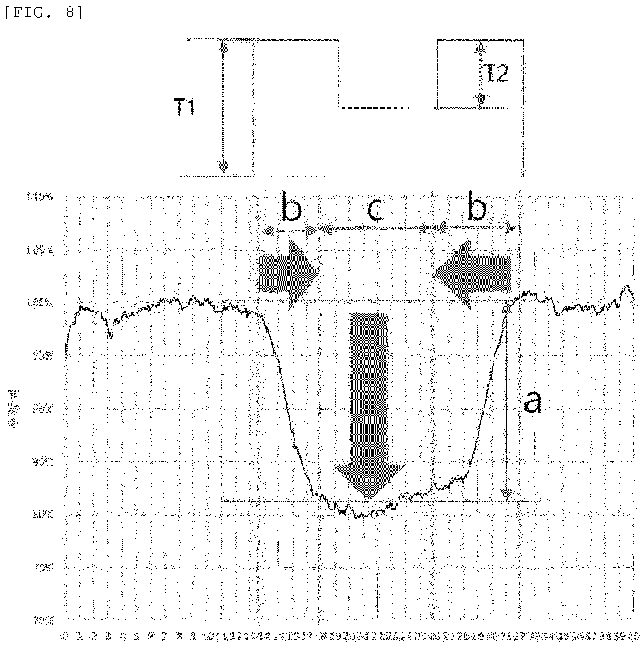

As illustrated in FIG. 5B, in case that the second protruding portion 13 of the slot die shim 10 protrudes to the outside, a pressure loss of a bead discharged through the groove 13a of the second protruding portion 13 increases, such that a width difference in which a coating width is larger than a discharge width decreases. Therefore, as a length by which the second protruding portion 13 protrudes to the outside increases, a portion where the level difference changes, i.e., a portion where the amount of coating changes decreases. In other words, region b in FIG. 8 decreases, in which the amount of coating gradually decreases or increases.

Referring to FIG. 5C, the other end of the second protruding portion 13 may be positioned inside the slot die and provided inward of the ends of the lips 21 and 31 of the first and second dies 20 and 30. In this case, the slot die shim 10 may not protrude to the outside.

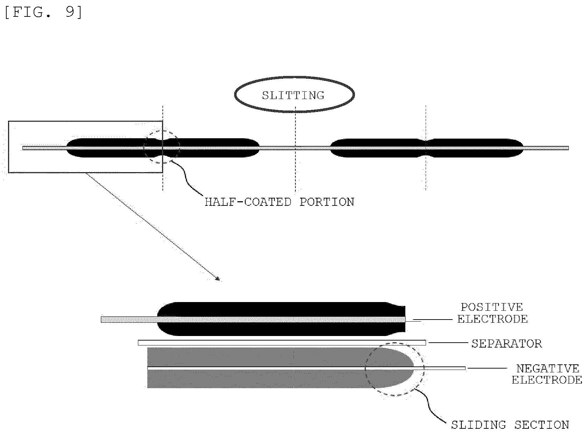

FIG. 8 is a graph showing a measured level difference of the electrode slurry applied by the slot die 100 according to the embodiment of the present specification and a view illustrating a shape of the half-coated portion and corresponding to a cross-sectional view of the second protruding portion 13. FIG. 9 is an exploded view of an electrode assembly manufactured by using the slot die 100 according to the embodiment of the present invention.

The electrode (or a first electrode) manufactured by the slot die 100 according to the present invention includes the half-coated portion formed by the second protruding portion 13. The half-coated portion may face a sliding section of another electrode (a second electrode). For example, a positive electrode manufactured by the slot die 100 according to the present invention may include the half-coated portion formed at a distal end thereof, and the half-coated portion of the positive electrode may face the sliding section provided at a distal end of a negative electrode.

In this case, the half-coated portion may have a shape opposite to a shape of the sliding section. Referring to FIG. 9, in the sliding section of the negative electrode, the amount of electrode slurry gradually decreases toward the distal end of the sliding section. In an initial portion of the half-coated portion of the positive electrode, a degree to which the amount of applied electrode slurry decreases is high. However, the amount of electrode slurry or a thickness of the half-coated portion may become constant in a direction toward the distal end of the half-coated portion. Therefore, in the slot die shim 10 according to the present invention, a ratio between the amount of positive electrode slurry in the positive electrode slurry coated portion and the amount of negative electrode slurry in the negative electrode slurry coated portion may be kept equal to a ratio between the amount of electrode slurry in the sliding region of the negative electrode and the amount of electrode slurry in the half-coated portion of the positive electrode.

That is, to constantly maintain a ratio of electrode slurry of the entire active material coated portion or a ratio of the amount of electrode active material, the slot die shim 10 according to the present invention may reduce the amount of positive electrode slurry in accordance with the amount of decrease in amount of the negative electrode slurry in the sliding section of the negative electrode and reduce the amount of positive electrode slurry in accordance with the amount of decrease in amount of the negative electrode slurry, thereby constantly maintaining a discharge capacity ratio.

Further, because the amount of electrode slurry in the positive electrode half-coated portion decreases in accordance with the sliding region of the negative electrode, a discharge capacity of the positive electrode may be smaller than a discharge capacity of the negative electrode, such that lithium precipitation may be reduced, and stability of the cell may be increased.

A height h of the groove 13a may be 0.1 mm to 10 mm, and particularly, the height h of the groove 13a may be 0.1 mm to 3 mm. Further, a volume of the groove 13a may be 0.1 volume% to 80 volume% of a volume of the flow path 14 defined by each of the first and second protruding portions 12 and 13. In particular, the volume of the groove 13a may be 0.1 volume% to 60 volume% of the volume of the flow path 14 defined by each of the first and second protruding portions 12 and 13.

Alternatively, the amount of supply of the electrode slurry through the second protruding portion 13 may be 0.1% to 80% of the amount of the electrode slurry supplied between the first and second protruding portions 12 and 13. That is, the amount of electrode slurry supplied through the groove 13a may be 0.1% to 80% of the amount of electrode slurry supplied through the flow path 14.

When a height T2 of the groove 13a is less than 0.1 mm and a volume of the groove 13a is less than 0.1%, the amount of electrode slurry applied onto the half-coated portion is small, which may cause a problem of a decrease in overall capacity of the secondary battery. Further, when the height of the groove 13a is more than 3 mm and the volume of the groove 13a is more than 60%, the amount of electrode slurry applied onto the half-coated portion increases, and a ratio of a surface film formed by lithium increases, which may decrease stability of the cell.

Referring to FIG. 8, a height of the half-coated portion may be adjusted on the basis of a difference (T1-T2) between a thickness T1 of the slot die shim 10 and a height T2 of the groove 13a. Specifically, height H3 in FIG. 2 or depth a in FIG. 8 may be adjusted on the basis of the difference (T1-T2) between the thickness T1 of the slot die shim 10 and the height T2 of the groove 13a.

A width of a sidewall of the groove 13a of the second protruding portion 13, which has a thickness equal to the thickness T1 of the slot die shim 10, affects a gradient of region b in which a level difference changes in a pattern of the electrode slurry. Region c is a region in which a level difference does not change in the pattern, i.e., a region having depth a.

The first and second dies 20 and 30 may be positioned on upper and lower portions of the slot die shim 10. In this case, the upper and lower portions of the slot die shim 10 may be defined in a direction perpendicular to the direction in which the electrode slurry is supplied.

The first and second dies 20 and 30 have truncated pyramidal shapes symmetric to each other. The first and second dies 20 and 30 are assembled so that one surface of the first die 20 and one surface of the second die 30, which correspond to bottom surfaces of the truncated pyramidal shapes, face each other. In this case, one surface of each of the first and second dies 20 and 30 may surround an outer surface of the slot die shim 10 and be larger than one surface of the slot die shim 10. Therefore, when the slot die 100 is assembled, the slot die shim 10 may not protrude to the outside.

At least one of the first and second dies 20 and 30 has the supply hole 1 through which the electrode slurry is supplied from the outside. The electrode slurry, which is supplied from the outside through the supply hole 1, is stored in an internal space 2 formed in at least one of the first and second dies 20 and 30.

The slot die shim 10 is interposed between the first and second dies 20 and 30. Therefore, the first and second dies 20 and 30 are spaced apart from each other by a thickness of the slot die shim 10, such that the flow path 14 is formed in the slot die 100. The electrode slurry stored in the internal space 2 flows in the slot die 100 along the flow path 14 and is discharged to the outside through a discharge port (not illustrated). The discharge port is thin and elongated. When the slot die 100 moves on the substrate at a predetermined speed, the electrode slurry may be widely and uniformly onto the substrate.

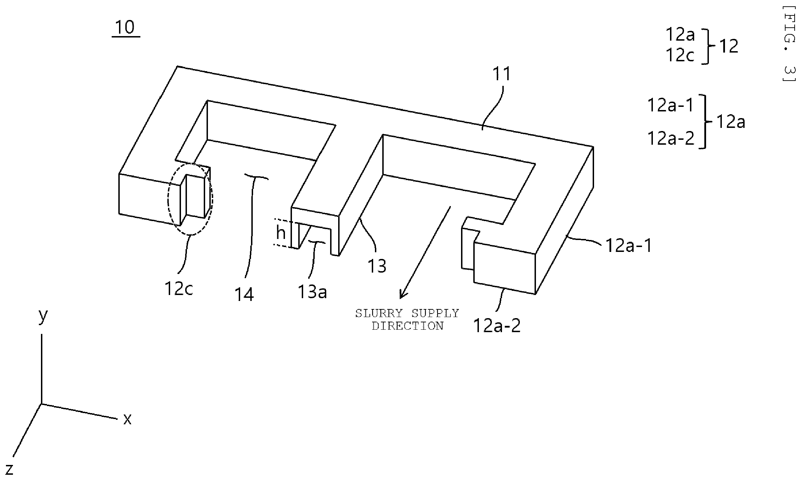

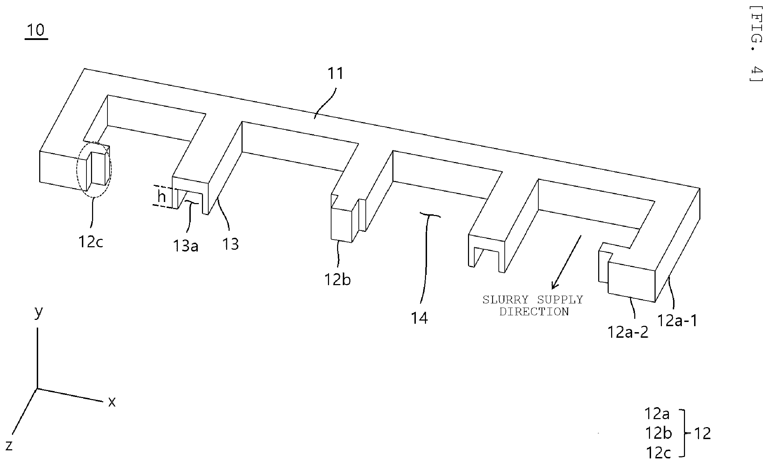

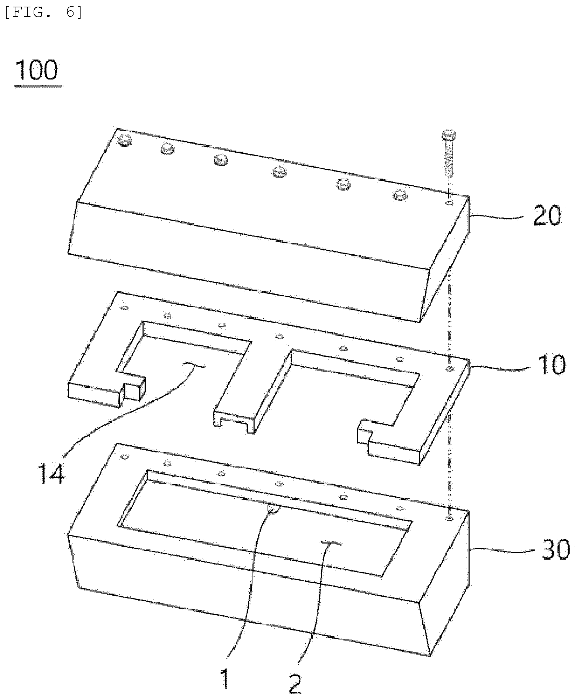

FIG. 3 is a perspective view of the slot die shim 10 according to another embodiment of the present invention, FIG. 4 is a perspective view of the slot die shim 10 according to still another embodiment of the present invention, and FIG. 6 is a perspective view illustrating the slot die 100 including the slot die shim 10 according to another embodiment of the present invention.

The first protruding portions 12 may include the first guides 12a respectively positioned at the two opposite ends of the coupling portion 11 and extending in the flow direction of the electrode slurry 4, and the second guide 12b positioned between the first guides 12a and extending in the flow direction of the electrode slurry. The first and second guides 12a and 12b may form the non-coated portions. The non-coated portion may be an electrode tab and coupled to an electrode lead.

The slot die shim 10 according to another embodiment of the present invention may include a set of protrusions (not illustrated) including the pair of first guides 12a and the second protruding portions 13.

The pair of first guides 12a may be respectively positioned at the two opposite ends of the coupling portion 11. Further, the first guide 12a may extend in the flow direction of the electrode slurry. A distal end of the first guide 12a based on the flow direction of the electrode slurry may be bent in a direction perpendicular to the flow direction of the electrode slurry. That is, the first guide 12a may include only an extension portion 12a-1 extending in the flow direction of the electrode slurry. The first guide 12a may include the extension portion 12a-1, and a bent portion 12a-2 positioned at a distal end of the extension portion 12a-1 and extending in the direction perpendicular to the flow direction of the electrode slurry.

At least one of the pair of first guides 12a may include the bent portion 12a-2. That is, the first protruding portion 12 may include the first guide 12a including both the extension portion 12a-1 and the bent portion 12a-2, and the first guide 12a including only the extension portion 12a-1. Alternatively, the first protruding portion 12 may include the pair of first guides 12a each including both the extension portion 12a-1 and the bent portion 12a-2.

A stepped portion 12c may be provided at an end of the first guide 12a, i.e., an end of the extension portion 12a-1 or an end of the bent portion 12a-2. In the present specification, the end may mean an edge of a distal end of a component.

The stepped portion 12c positioned at the end of the first guide 12a of the slot die shim 10 may reduce the amount of the electrode slurry to be supplied to two opposite edges of the coated portion, i.e., two opposite ends of the coated portion. Further, the slot die shim 10 may form the sliding section formed at the edge of the coated portion as the amount of flow of the electrode slurry is decreased because of friction between the first protruding portion 12 and the electrode slurry supplied to the flow path 14.

The stepped portion 12c of the first guide 12a may reduce the amount of electrode slurry to be supplied to the sliding section, such that the stepped portion 12c and a frictional force with the first guide 12a may stop the supply of the electrode slurry to the edge of the coated portion. Therefore, the sliding section of the coated portion is not formed, and the electrode slurry is uniformly discharged to the edge and the center of the coated portion, such that a thickness deviation may be reduced.

The stepped portion 12c may have a size of 0.5 mm to 15 mm in the flow direction of the electrode slurry and have a size of 0.1 mm to 5 mm in the direction perpendicular to the flow direction of the electrode slurry. Particularly, the stepped portion 12c may have the size of 1 mm to 10 mm in the flow direction of the electrode slurry and have the size of 0.1 mm to 1 mm in the direction perpendicular to the flow direction of the electrode slurry.

In case that the stepped portion 12c has a size of less than 1 mm in the flow direction of the electrode slurry and has a size of less than 0.1 mm in the direction perpendicular to the flow direction of the electrode slurry, there may occur a problem in that a sliding section is formed at the distal end of the coated portion, and an electrode, which is a product, has a thickness deviation. Further, in case that the stepped portion 12c has a size of more than 10 mm in the flow direction of the electrode slurry and has a size of more than 1 mm in the direction perpendicular to the flow direction of the electrode slurry, there may occur a problem in that the electrode slurry is applied onto the non-coated portion formed by the first guide 12a, and the electrode tab is not formed.

Referring to FIG. 4, the slot die shim 10 according to yet another embodiment of the present invention may include a plurality of sets of protrusions. The slot die shim 10 including the plurality of sets of protrusions may have the second guide 12b.

The slot die shim 10 may include the second guide 12b disposed between the pair of first guides 12a. Like the first guide 12a, the second guide 12b may have the stepped portions 12c provided at two opposite ends thereof to prevent a sliding section from being formed at the edge of the coated portion. In other words, the second guide 12b may have the stepped portions 12c provided at the edges provided at positions facing each other.

Further, the non-coated portion formed by the second guide 12b may slit a middle portion of the electrode, thereby forming the electrode in the form of two sheets.

While the present invention has been described above with reference to the exemplary embodiments, it may be understood by those skilled in the art that the present invention may be variously modified and changed without departing from the scope of the present invention disclosed in the claims.

## Claims

1. A slot die shim (10), which is configured to be interposed between a first die (20) and a second die (30) and is configured to provide a plurality of flow paths (14) separated by a plurality of protruding portions so that electrode slurry flows through the plurality of flow paths (14), the slot die shim (10) comprising:
a coupling portion (11) coupled to the first (20) and second (30) dies;
two or more first protruding portions (12) protruding from one side of the coupling portion (11) and spaced apart from one another; and
one or more second protruding portions (13) positioned between the first protruding portions (12),
wherein the second protruding portion (13) includes a groove (13a) through which the electrode slurry flows;
wherein the groove (13a) has a structure having three sides closed by an inner wall of the second protruding portion (13), except for a side in a direction in which the electrode slurry is supplied and flows, and the second protruding portion (13) is configured to coat one surface of a substrate with the electrode slurry smaller in amount than the electrode slurry applied through the flow path (14) .

2. The slot die shim (10) of claim 1, wherein a height of the groove is 0.1 mm to 3 mm.

3. The slot die shim (10) of claim 1, wherein a volume of the groove is 0.1 volume% to 60 volume% of a volume of the flow path (14) provided between the first (12) and second (13) protruding portions.

4. The slot die shim (10) of claim 1, wherein the first protruding portions (12) comprise:
two or more first guides (12a) positioned at two opposite ends of the coupling portion (11) and extending in a direction parallel to a plane on which the coupling portion (11) and the first (20) and second (30) dies are in contact with one another; and
a second guide (12b) positioned between the two or more first guides (12a) and extending in a direction parallel to the direction in which the first guide (12a) extends, and
wherein the second protruding portion (13) is positioned between the first guide (12a) and the second guide (12b).

5. The slot die shim (10) of claim 6, wherein a distal end of at least one of the first guides (12a) is bent in a direction in which the second guide (12b) is positioned.

6. The slot die shim (10) of claim 4 or 5, wherein a stepped portion is provided on at least one edge of the first guide (12a).

7. The slot die shim (10) of claim 6, wherein the stepped portion (12c) is provided at the edge of the two opposite edges of the first guide (12a) that is positioned at an outer periphery.

8. The slot die shim (10) of claim 4, wherein stepped portions (12c) are formed on edges of the second guide (12b) that face each other.

9. The slot die shim (10) of claim 1, wherein the flow path (14) is opened in a direction parallel to a plane on which the coupling portion (11) and the first (20) and second (30) dies are in contact with one another, and the flow path(14) has a structure having three sides closed except for a side in the direction in which the flow path (14) is opened.

10. A slot die (100) comprising:
two or more dies (20, 30) each having a lip (21, 31) provided at one end thereof; and
a slot die shim (10) according to claim 1 provided between the two or more lips (21, 31) to discharge electrode slurry.

11. The slot die (100) of claim 10, wherein the other end of the second protruding portion (13) is positioned outside the slot die (100) and provided outward of an end of the lip (21, 31).

12. The slot die (100) of claim 10, wherein the other end of the second protruding portion (13) is positioned on the same line as an end of the lip (21, 31).

13. The slot die (100) of claim 10, wherein the other end of the second protruding portion (13) is positioned inside the slot die (100) and provided inward of an end of the lip (21, 31).

## Patentansprüche

1. Schlitzdüsenabstandshalter (10), welcher dazu eingerichtet ist, zwischen einer ersten Düse (20) und einer zweiten Düse (30) eingefügt zu sein, und dazu eingerichtet ist, eine Mehrzahl von Strömungswegen (14) bereitzustellen, welche durch eine Mehrzahl von Vorsprungabschnitten getrennt sind, sodass eine Elektrodensuspension durch die Mehrzahl von Strömungswegen (14) fließt, der Schlitzdüsenabstandshalter (10) umfassend:
einen Kopplungsabschnitt (11), welcher mit der ersten (20) und zweiten (30) Düse gekoppelt ist;
zwei oder mehr Vorsprungabschnitte (12), welche von einer Seite des Kopplungsabschnitts (11) vorstehen und voneinander beabstandet sind; und
einen oder mehrere zweite Vorsprungabschnitte (13), welche zwischen den ersten Vorsprungabschnitten (12) angeordnet sind,
wobei der zweite Vorsprungabschnitt (13) eine Nut (13a) umfasst, durch welche die Elektrodensuspension strömt;
wobei die Nut (13a) eine Struktur aufweist, welche drei Seiten aufweist, welche durch eine innere Wandung des zweiten Vorsprungabschnitts (13) verschlossen sind, mit Ausnahme einer Seite in einer Richtung, in welcher die Elektrodensuspension zugeführt wird und strömt, und der zweite Vorsprungabschnitt (13) dazu eingerichtet ist, eine Fläche eines Substrats mit der Elektrodensuspension zu beschichten, welche geringer in einer Menge als die Elektrodensuspension ist, welche durch den Strömungsweg (14) angebracht ist.

2. Schlitzdüsenabstandshalter (10) nach Anspruch 1, wobei eine Höhe der Nut 0,1 mm bis 3 mm ist.

3. Schlitzdüsenabstandshalter (10) nach Anspruch 1, wobei ein Volumen der Nut 0,1 Volumen% bis 60 Volumen% eines Volumens des Strömungswegs (14) ist, welcher zwischen dem ersten (12) und dem zweiten (13) Vorsprungabschnitt bereitgestellt ist.

4. Schlitzdüsenabstandshalter (10) nach Anspruch 1, wobei die ersten Vorsprungabschnitte (12) umfassen:
zwei oder mehr erste Führungen (12a), welche an zwei entgegengesetzten Enden des Kopplungsabschnitts (11) angeordnet sind und sich in einer Richtung erstrecken, welche parallel zu einer Ebene ist, an welcher der Kopplungsabschnitt (11) und die erste (20) und zweite (30) Düse miteinander in Kontakt stehen; und
eine zweite Führung (12b), welche zwischen den zwei oder mehreren ersten Führungen (12a) angeordnet sind und sich in einer Richtung erstrecken, welche parallel zu der Richtung ist, in welcher sich die erste Führung (12a) erstreckt, und
wobei der zweite Vorsprungabschnitt (13) zwischen der ersten Führung (12a) und der zweiten Führung (12b) angeordnet ist.

5. Schlitzdüsenabstandshalter (10) nach Anspruch 6, wobei ein distales Ende von wenigstens einer der ersten Führungen (12a) in einer Richtung gebogen ist, in welcher die zweite Führung (12b) angeordnet ist.

6. Schlitzdüsenabstandshalter (10) nach Anspruch 4 oder 5, wobei ein gestufter Abschnitt an wenigstens einem Rand der ersten Führung (12a) bereitgestellt ist.

7. Schlitzdüsenabstandshalter (10) nach Anspruch 6, wobei der gestufte Abschnitt (12c) an dem Rand der zwei entgegengesetzten Ränder der ersten Führung (12a) bereitgestellt ist, welcher an einem äußeren Umfang angeordnet ist.

8. Schlitzdüsenabstandshalter (10) nach Anspruch 4, wobei gestufte Abschnitte (12c) an Rändern der zweiten Führung (12b) gebildet sind, welche einander zugewandt sind.

9. Schlitzdüsenabstandshalter (10) nach Anspruch 1, wobei der Strömungsweg (14) in einer Richtung geöffnet ist, welche parallel zu einer Ebene ist, an welcher der Kopplungsabschnitt (11) und die erste (20) und zweite (30) Düse miteinander in Kontakt stehen, und wobei der Strömungsweg (14) eine Struktur aufweist, welche drei geschlossene Seiten aufweist, mit Ausnahme einer Seite in der Richtung, in welcher der Strömungsweg (14) geöffnet ist.

10. Schlitzdüse (100), umfassend:
zwei oder mehr Düsen (20, 30), welche jeweils eine Lippe (21, 31) aufweisen, welche an einem Ende davon bereitgestellt sind; und
einen Schlitzdüsenabstandshalter (10) nach Anspruch 1, welcher zwischen den zwei oder mehr Lippen (21, 31) bereitgestellt ist, um eine Elektrodensuspension abzugeben.

11. Schlitzdüse (100) nach Anspruch 10, wobei das andere Ende des zweiten Vorsprungabschnitts (13) außerhalb der Schlitzdüse (100) angeordnet ist und außerhalb eines Endes der Lippe (21, 31) bereitgestellt ist.

12. Schlitzdüse (100) nach Anspruch 10, wobei das andere Ende des zweiten Vorsprungabschnitts (13) an der gleichen Linie wie ein Ende der Lippe (21, 31) angeordnet ist.

13. Schlitzdüse (100) nach Anspruch 10, wobei das andere Ende des zweiten Vorsprungabschnitts (13) innerhalb der Schlitzdüse (100) angeordnet ist und innerhalb eines Endes der Lippe (21, 31) bereitgestellt ist.

## Revendications

1. Cale de filière à fente (10), qui est configurée pour être interposée entre une première filière (20) et une seconde filière (30) et est configurée pour fournir une pluralité de chemins d'écoulement (14) séparés par une pluralité de parties saillantes de sorte qu'une suspension d'électrode s'écoule à travers la pluralité de chemins d'écoulement (14), la cale de filière à fente (10) comprenant :
une partie d'accouplement (11) accouplée à la première filière (20) et à la seconde filière (30) ;
deux premières parties saillantes (12) ou plus faisant saillie depuis un côté de la partie d'accouplement (11) et espacées les unes des autres ; et
une ou plusieurs secondes parties saillantes (13) positionnées entre les premières parties saillantes (12),
dans laquelle la seconde partie saillante (13) comporte une rainure (13a) à travers laquelle la suspension d'électrode s'écoule ;
dans laquelle la rainure (13a) a une structure ayant trois côtés fermés par une paroi intérieure de la seconde partie saillante (13), à l'exception d'un côté dans une direction dans laquelle la suspension d'électrode est amenée et s'écoule, et la seconde partie saillante (13) est configurée pour recouvrir une surface d'un substrat avec la suspension d'électrode en une plus petite quantité que la suspension d'électrode appliquée à travers le chemin d'écoulement (14).

2. Cale de filière à fente (10) selon la revendication 1, dans laquelle une hauteur de la rainure est de 0,1 mm à 3 mm.

3. Cale de filière à fente (10) selon la revendication 1, dans laquelle un volume de la rainure est de 0,1 % en volume à 60 % en volume d'un volume du chemin d'écoulement (14) fourni entre les premières parties saillantes (12) et les secondes parties saillantes (13).

4. Cale de filière à fente (10) selon la revendication 1, dans laquelle les premières parties saillantes (12) comprennent :
deux premiers guides (12a) ou plus positionnés à deux extrémités opposées de la partie d'accouplement (11) et s'étendant dans une direction parallèle à un plan sur lequel la partie d'accouplement (11) et la première filière (20) et la seconde filière (30) sont en contact les unes avec les autres ; et
un second guide (12b) positionné entre les deux premiers guides (12a) ou plus et s'étendant dans une direction parallèle à la direction dans laquelle le premier guide (12a) s'étend, et
dans laquelle la seconde partie saillante (13) est positionnée entre le premier guide (12a) et le second guide (12b).

5. Cale de filière à fente (10) selon la revendication 6, dans laquelle une extrémité distale d'au moins un parmi les premiers guides (12a) est courbée dans une direction dans laquelle le second guide (12b) est positionné.

6. Cale de filière à fente (10) selon la revendication 4 ou 5, dans laquelle une partie étagée est fournie sur au moins un bord du premier guide (12a).

7. Cale de filière à fente (10) selon la revendication 6, dans laquelle la partie étagée (12c) est fournie au bord des deux bords opposés du premier guide (12a) qui est positionné à une périphérie extérieure.

8. Cale de filière à fente (10) selon la revendication 4, dans laquelle des parties étagées (12c) sont formées sur des bords du second guide (12b) qui se font face.

9. Cale de filière à fente (10) selon la revendication 1, dans laquelle le chemin d'écoulement (14) est ouvert dans une direction parallèle à un plan sur lequel la partie d'accouplement (11) et la première filière (20) et la seconde filière (30) sont en contact les unes avec les autres, et le chemin d'écoulement (14) a une structure ayant trois côtés fermés à l'exception d'un côté dans la direction dans laquelle le chemin d'écoulement (14) est ouvert.

10. Filière à fente (100) comprenant :
deux filières (20, 30) ou plus ayant chacune une lèvre (21, 31) fournie à une extrémité de celle-ci ; et
une cale de filière à fente (10) selon la revendication 1 fournie entre les deux lèvres (21, 31) ou plus pour évacuer la suspension d'électrode.

11. Filière à fente (100) selon la revendication 10, dans laquelle l'autre extrémité de la seconde partie saillante (13) est positionnée à l'extérieur de la filière à fente (100) et fournie vers l'extérieur d'une extrémité de la lèvre (21, 31).

12. Filière à fente (100) selon la revendication 10, dans laquelle l'autre extrémité de la seconde partie saillante (13) est positionnée sur la même ligne qu'une extrémité de la lèvre (21, 31).

13. Filière à fente (100) selon la revendication 10, dans laquelle l'autre extrémité de la seconde partie saillante (13) est positionnée à l'intérieur de la filière à fente (100) et fournie vers l'intérieur d'une extrémité de la lèvre (21, 31).
